## Europäisches Patentamt
## European Patent Office
## Office européen des brevets

(19)

(11) Veröffentlichungsnummer: **0 146 598**
**B1**

# EUROPÄISCHE PATENTSCHRIFT

(12)

(45) Veröffentlichungstag der Patentschrift:
31.08.88

(51) Int. Cl.⁴: **B 65 G 17/06**

(21) Anmeldenummer: **84902341.1**

(22) Anmeldetag: **08.06.84**

(86) Internationale Anmeldenummer:
**PCT/EP 84/00172**

(87) Internationale Veröffentlichungsnummer:
**WO 84/04909 (20.12.84 Gazette 84/30)**

---

(54) **KETTEN-FÖRDEREINHEIT.**

---

(30) Priorität: **10.06.83 DE 3321018**

(43) Veröffentlichungstag der Anmeldung:
**03.07.85 Patentblatt 85/27**

(45) Bekanntmachung des Hinweises auf die Patenterteilung:
**31.08.88 Patentblatt 88/35**

(84) Benannte Vertragsstaaten:
**AT CH FR GB IT LI NL SE**

(56) Entgegenhaltungen:
**DE-A-1 602 242**
**DE-B-1 049 302**
**FR-A-1 577 917**
**GB-A-731 361**
**US-A-3 669 247**

(73) Patentinhaber: **Fahrion, Otmar, Iltisweg 31, D-7014 Kornwestheim (DE)**

(72) Erfinder: **Fahrion, Otmar, Iltisweg 31, D-7014 Kornwestheim (DE)**

(74) Vertreter: **Ostertag, Reinhard, Patentanwälte Dr. Ulrich Ostertag Dr. Reinhard Ostertag Eibenweg 10, D-7000 Stuttgart 70 (DE)**

---

LIBER, STOCKHOLM 1988

## Beschreibung

Die Erfindung betrifft eine Förderkette zur Verwendung in einem Palettenförderer gemäß dem Oberbegriff des Anspruches 1 sowie Verfahren zu ihrer Herstellung und eine Kettenfördereinheit mit einer solchen Förderkette.

Eine Förderkette gemäß dem Oberbegriff des Anspruches 1 ist in der GB-A-731 361 offenbart. Bei dieser Kette dienen die Tragkappen allerdings nicht direkt zum Tragen einer Last, sind vielmehr zur Anbringung breiter Tragplatten bestimmt, welche die zu fördernde Last abstützen. Derartige Förderer mit breiten Tragplatten sind auch in der US-PS-3 669 247, der DE-AS-1 049 302 und der DE-OS-1 602 242 beschrieben. Sie finden u.a. als Gepäckförderer in Flughäfen Verwendung.

Es sind ferner Förderer für Paletten bekannt, welche zwei in einer horizontalen Förderebene angeordnete Förderketten aufweisen, die unter Abstand parallel zueinander laufen. Dabei sind die Gelenkachsen der Kette senkrecht zur Förderebene ausgerichtet. Außerhalb der außenliegenden Kettenlasche sind plättchenförmige Tragglieder vorgesehen, von denen das untere in Gleitberührung auf einer Abstützfläche des Fördererrahmens läuft, während das obere ein Ende einer Palette abstützt (das andere Palettenende wird von den oberen Tragplättchen der zweiten, unter Abstand angeordneten Förderkette getragen). Die in Förderrichtung gesehen vorderen und hinteren Stirnflächen der Tragplättchen sind konvex bzw. konkav zylindrisch ausgebildet, wobei die Achsen dieser Zylinderflächen mit Bolzenachsen der Ketten zusammenfallen. Auf diese Weise können die Tragplättchen eine im wesentlichen glatt durchgehende Fläche bilden, auch wenn der Förderweg Kurven aufweist.

Nachteilig ist an derartigen Palettenförderern, daß der Förderweg in der Förderebene immer geschlossen sein muß. Solche Palettenförderer benötigen somit viel Platz. Außerdem tritt in Kurven des Förderweges zwangsläufig Schlupf auf, da die beiden unter Abstand angeordneten Förderketten einen unterschiedlich großen Weg durchlaufen. Nachteilig ist an diesen bekannten Palettenförderern ferner, daß man den Abstand der beiden Fördereinheiten nicht ändern kann, da die Umlenkeinheiten, die bei den Kurven des Förderweges vorgesehen sind (z. B. Umlenkschienen oder Umlenkräder), nur für genau einen Abstand der Förderketten passen.

Die vorgenannten Schwierigkeiten werden nicht angetroffen bei Rollenförderern. Diese haben aber den Nachteil, daß zwischen dem geförderten Gut und den Fördermitteln nur ein linienhafter Kontakt besteht, so daß keine nennenswerten Kräfte zum Beschleunigen und Abbremsen der geförderten Güter ausgeübt werden können. Gerade in Fertigungsstraßen ist aber ein intermittierendes Weiterbewegen von durch Paletten getragenen Werkstücken von einer Arbeitsstation zur nächsten sehr wichtig.

Bei der in der GB-A-731 361 beschriebenen Förderkette ist nachteilig, daß zwischen den aufeinanderfolgenden Tragkappen Spalte unterschiedlicher Breite liegen, wenn die Förderkette auf einem gekrümmten Förderweg bewegt wird. Es ist daher möglich, daß zwischen die aufeinanderfolgenden Tragkappen kleinere Gegenstände oder Verunreinigungen wie Metallspäne eingeklemmt werden. Auch können durch die Spalte zwischen aufeinanderfolgende Tragkappen Verunreinigungen wie in Arbeitsstraßen zur spanenden Bearbeitung von Werkstücken anfallende Späne zur Gliederkette gelangen und diese im Laufe der Zeit beschädigen.

Durch die vorliegende Erfindung soll daher eine Förderkette gemäß dem Oberbegriff des Anspruches 1 so weitergebildet werden, daß die aufeinanderfolgenden Tragkappen auch dann, wenn die Förderkette einen gekrümmten Weg durchläuft, eine glatt durchgehende, geschlossene Förderfläche bilden und die in den Tragkappen eingeschlossene Gliederkette zuverlässig gegen Eindringen von Verunreinigungen schützen.

Diese Aufgabe ist erfindungsgemäß gelöst durch eine Förderkette gemäß Anspruch 1.

Durch die angegebene Ausbildung der Tragkappen wird erreicht, daß die Gliederkette von drei Seiten her gegen das Eindringen von Fremdkörpern und Verunreinigungen geschützt ist. Sowohl die durch die Außenfläche des Verbindungsabschnittes des U gebildete Arbeitsfläche als auch die durch die Seitenflächen der Kappenschenkel gebildeten Arbeitsflächen sind auch beim Bewegen der Förderkette auf gekrümmter Bahn glatt durchgehend. Man kann somit die erfindungsgemäße Förderkette gleichermaßen gut in Verbindung mit Umlenkrädern, deren Achse horizontal ausgerichtet ist, als auch mit Umlenkrädern, deren Achse vertikal ausgerichtet ist, verwenden.

Aus der US-PS-3 669 247 und der DE-OS-1 602 242 ist zwar an sich bekannt, die Spalte zwischen aufeinanderfolgenden Tragkappen dadurch etwas zu verkleinern, daß man zumindest eine der Stirnflächen der Tragkappen gebogen ausführt. Bei diesen bekannten Förderketten erstreckt sich eine Tragkappe aber immer über zwei Gelenkachsen der Gliederkette, und es ist deshalb nicht möglich, eine vollständige Abdichtung des durch die Tragkappen begrenzten Aufnahmekanales für die Gliederkette nach außen zu gewährleisten. Außerdem sind bei diesen bekannten Förderketten keine seitlichen Arbeitsflächen vorhanden, die im Bedarfsfalle als Tragfläche für Werkstücke oder als Lauffläche verwendet werden können.

Dadurch, daß bei der erfindungsgemäßen Förderkette jeder Gelenkachse genau eine Tragkappe zugeordnet ist und die vorderen und hinteren Stirnflächen als zu den Gelenkachsen konzentrische Zylinderflächen ausgebildet sind, wird erreicht, daß auch in verhältnismäßig stark gekrümmten Abschnitten des Förderweges, z. B. auf verhältnismäßig kleinen Durchmesser aufweisenden Umlenkrädern, eine gute Kapselung der Gliederkette gewährleistet ist.

Mit der Weiterbildung der Erfindung gemäß Anspruch 2 wird erreicht, daß von der Förderkette getragene Paletten in zur Förderebene senkrechter Richtung besonders präzise positioniert werden, da das Gewicht über die starr ausgebildeten Tragkappen auf den Rahmen des Förderers übertragen wird. Zugleich braucht auch die Gliederkette selbst den zuweilen sehr hohen Gewichtskräften der bewegten Lasten nicht standzuhalten.

Die Weiterbildung der Erfindung gemäß Anspruch 5 ermöglicht es, in ein und derselben Anlage den Förderweg allgemein im Raum gekrümmt zu wählen (sowohl senkrecht zur Grundförderebene als auch in dieser gekrümmt), wobei nach wie vor eine glatt durchgehende flächige Auflage für geförderte Paletten gewährleistet ist.

Die Weiterbildungen der Erfindung gemäß den Ansprüchen 6 und 7 sind im Hinblick auf ein einfaches Herstellen der Förderkette von Vorteil. Obwohl die Tragkappen die Gliederkette fast vollständig umgeben, braucht man keinerlei komplizierte Werkzeuge, um die verschiedenen miteinander zu verbindenden Teile aufeinander auszufluchten. Vielmehr kann die Gliederkette bei noch guter Zugänglichkeit in an sich bekannter Weise montiert werden, und anschließend werden die Tragkappen nacheinander über die Gliederkette gestülpt und auf die zugeordnete Gelenkachse ausgerichtet, worauf dann sämtliche Teile durch Verdrängen des zugeordneten Montagebolzens unter Verwendung des richtigen Kettenbolzens fest miteinander verbunden werden.

Die Weiterbildung der Erfindung gemäß Anspruch 8 ist im Hinblick auf eine vollständige Kapselung der Förderkette auch von der offenen Seite des die Gliederkette aufnehmenden Kanales der Tragkappen her von Vorteil. An die Gliederkette können somit aus dem Außenraum überhaupt keine Verunreinigungen und Fremdkörper gelangen, nachdem die Tragkappen zusammen mit den beiden seitlichen Wangenplatten des Rahmens ein dichtes Gehäuse begrenzen.

Mit der Weiterbildung der Erfindung gemäß Anspruch 9 wird erreicht, daß die Paletten auf einem Abschnitt des zwischen Arbeitsstationen zurückzulegenden Weges, wo es auf eine genaue Positionierung weniger ankommt, mit nur geringer Reibung gefördert werden können.

Mit der Weiterbildung der Erfindung gemäß Anspruch 10 wird erreicht, daß man den Förderweg, auf welchem die Förderkette geführt wird, bei einer Arbeitsstation aus der Haupt-Förderebene absenken kann, um so eine Palette auf einem zwischen den beiden beabstandeten Förderketten angeordneten starren Tisch abzusetzen.

Nachstehend wird die Erfindung anhand von Ausführungsbeispielen unter Bezugnahme auf die Zeichnung näher erläutert. In dieser zeigen:

Figur 1: eine seitliche Ansicht eines Teiles einer Fördereinheit eines Palettenförderers, welcher einem der Umlenkräder für die Förderkette benachbart ist, wobei eine seitliche Wangenplatte des Rahmens der Fördereinheit abgenommen ist;

Figur 2: einen vertikalen Schnitt durch die Fördereinheit nach Figur 1 längs der abgewinkelten Schnittlinie II-II;

Figur 3: eine Aufsicht auf einen Teil des oberen Arbeitstrums der Fördereinheit nach Figur 1, wobei Teile von Tragkappen weggebrochen sind;

Figur 4: eine schematische seitliche Ansicht eines Teiles einer abgewandelten Fördereinheit;

Figur 5: zwei um 90° gegeneinander versetzte, in vertikaler Richtung aufeinander ausgefluchtete Ansichten einer mit Tragkappen versehenen Kreuzgelenkkette für einen Palettenförderer;

Figur 6: einen transversalen Schnitt durch die Anordnung nach Figur 5 längs der dortigen Schnittlinie VI-VI;

Figur 7: einen transversalen Schnitt durch eine weiter abgewandelte Fördereinheit, welcher eine Abwandlung des oberen Teiles von Figur 2 darstellt; und

Figur 8: verschiedene Stadien beim Zusammenbau einer mit Tragkappen bestückten Gliederkette.

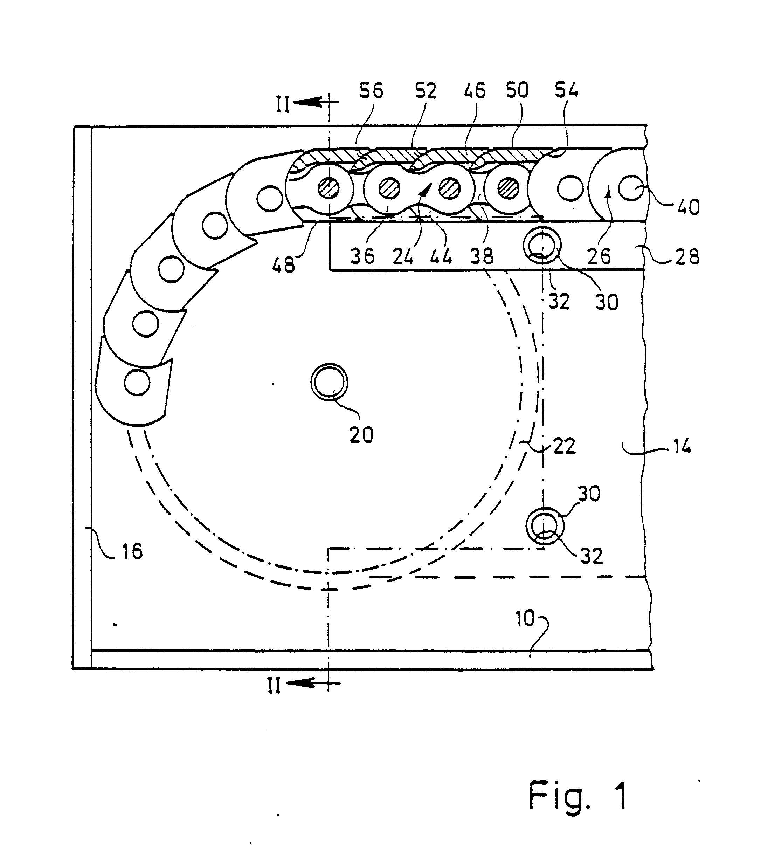

Die in den Figuren 1 bis 3 gezeigte Fördereinheit, welche zusammen mit einer gleich ausgebildeten, unter seitlichem Abstand angeordneten Fördereinheit einen Palettenförderer bildet, hat eine Bodenplatte 10, an welcher mittels Schrauben 12 zwei seitliche Wangenplatten 14 befestigt sind. Letztere sind durch eine dazwischenliegende Endplatte 16 versteift und dicht verbunden.

In den Wangenplatten 14 ist über Lager 18 eine Welle 20 eines Kettenrades 22 gelagert, über welche eine insgesamt mit 24 bezeichnete Gliederkette läuft. Von dieser sind nur einige Kettenglieder in Einzelheiten wiedergegeben; im übrigen ist die Kette durch eine gestrichelte Linie angedeutet.

Die Gliederkette 24 trägt eine Vielzahl bündig aneinanderstoßender Tragkappen 26, welche im Bereich des obenliegenden Trums der Gliederkette 24 durch eine rahmenfeste Stützplatte 28 abgestützt sind.

Die Stützplatte 28 dient zugleich als oberes Distanzstück zwischen den Wangenplatten 14, und durch sie erstrecken sich Traghülsen 30, die in Bohrungen 32 der Wangenplatte 14 Aufnahme finden. Durch die Traghülsen 30 wiederum erstrecken sich Gewindebolzen 33, welche zusammen mit Muttern 34 zum Verspannen der Wangenplatten 14 dienen. Auf ähnliche Weise sind auch die unteren Enden der Wangenplatten zusammengehalten.

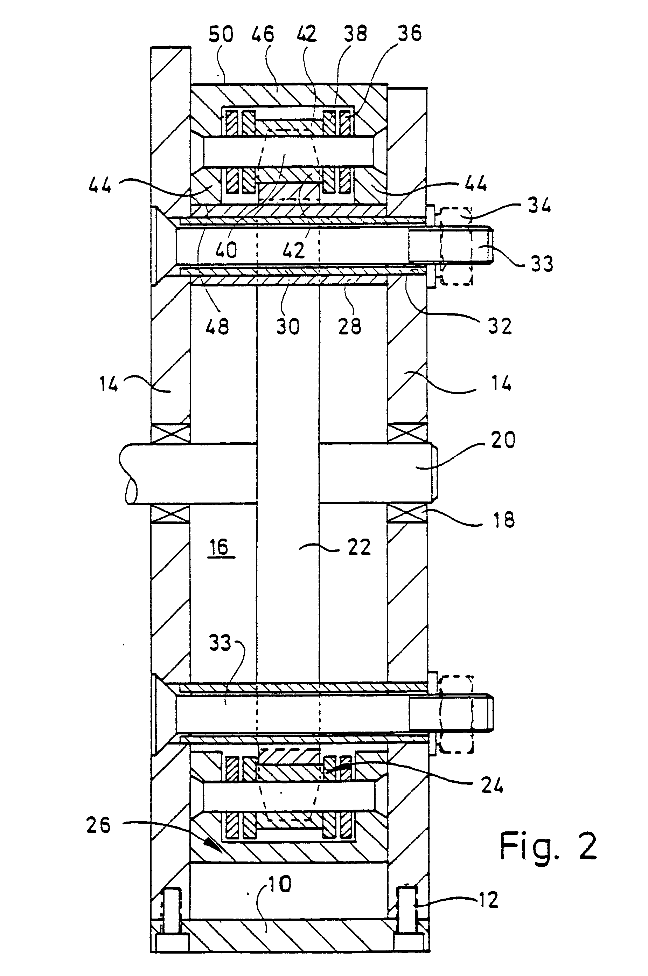

Wie insbesondere aus den Figuren 1 und 2 ersichtlich ist, gehören zu jedem Kettenglied zwei außenliegende Laschen 36 und zwei innenliegende Laschen 38 sowie Bolzen 40. Die Bolzen 40 sitzen im Preßsitz in den äußeren Laschen 36 und tragen gelenkig die inneren Laschen 38. Letztere sind durch dazwischenliegende Hülsen 42 auf vorgegebenem Abstand gehalten.

Wie am besten aus Figur 2 ersichtlich, erstrecken sich die Bolzen 40 über die außenliegenden Laschen 36 hinaus und durchsetzen Schenkel 44 der Tragkappen 26. Die Schenkel 44 sind durch einen Tragabschnitt 46 verbunden, derart, daß die Tragkappen ein transversales Querschnittsprofil in Form eines rechteckigen U aufweisen. Die Außenflächen der Schenkel 44 sind planparallel und passen im Gleitspiel zwischen die Innenseiten der Wangenplatten 14.

Am in den Figuren 1 und 2 untenliegenden Ende sind die Schenkel 44 mit großen Gleitflächen 48 versehen, welche parallel zu den ebenfalls großen Oberseiten 50 der Tragabschnitte 46 verlaufen. Die Gleitflächen 48 bilden somit eine im wesentlichen durchgehende Gleitfläche, welche in Berührung zur Oberseite der Stützplatte 28 steht, während die Oberseiten 50 zusammen eine durchgehende Tragfläche bilden, auf welcher ein Ende einer Palette abgestützt und im Reibschluß mitgenommen werden kann.

In einer senkrecht auf der Förderebene stehenden und die Förderrichtung enthaltenden Schnittebene gesehen (vergl. Figur 1) haben die Tragkappen 26 jeweils eine konvex gekrümmte zylindrische Stirnfläche 52 und eine komplementär konkav gekrümmte zylindrische Stirnfläche 54. Die Achse der konvexen Stirnfläche 52 fällt mit der Achse desjenigen Bolzens 40 zusammen, welcher sich durch die Schenkel 44 einer betrachteten Tragkappe 26 erstreckt. Die Achse der konkaven Stirnfläche 54 einer betrachteten Tragkappe fällt mit der Achse des nächstbenachbarten der Bolzen 40 zusammen.

Die Stirnflächen 52 und 54 betreffen gleichermaßen die Schenkel 44 und den Tragabschnitt 46. An letzteren und die Schenkel 44 ist zugleich ein nach innen gezogener Dichtsteg 56 angeformt, um auch bei stärkerer Krümmung der Förderkette eine Abdichtung aufrechtzuerhalten.

Aus den Figuren 1 und 2 ist gut ersichtlich, daß die Tragkappen 26 zusammen mit den Wangenplatten 14 auf sehr einfache Weise eine vollständige Kapselung der Gliederkette 24 sicherstellen. Zugleich ist ein guter flächiger Kontakt zu zu fördernden Paletten gewährleistet. Deren Gewicht wird über die Tragkappen 26 großflächig verteilt auf die Stützplatte 28 weitergegeben zugleich ist gewährleistet, daß die Paletten in vertikaler Richtung sehr genau positioniert sind, da die Tragkappen 26 starre Teile sind, z. B. Feingußteile

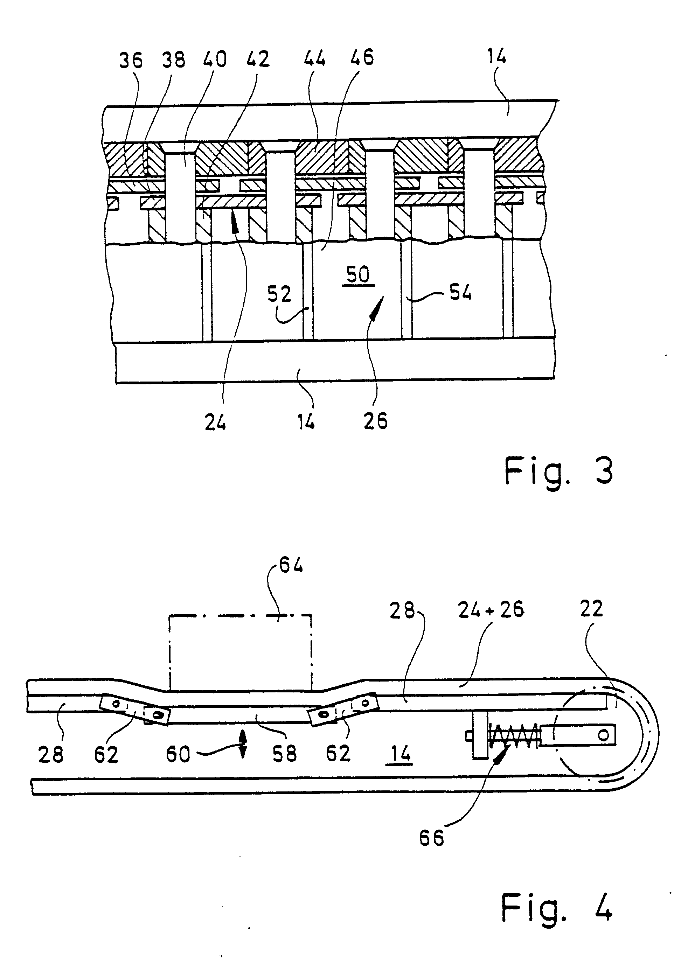

Bei der oben unter Bezugnahme auf die Figuren 1 bis 3 beschriebenen Fördereinheit ist die mit den Tragkappen 26 bestückte Gliederkette 24 in beiden Richtungen senkrecht zur Förderebene beweglich. Man kann daher anstelle einer eben durchgehenden Stützplatte 28 auch auf verschiedener Höhe angeordnete Stützplatten vorsehen, insbesondere auch zwischen rahmenfeste Stützplatten eine höhenverstellbare Hubplatte einfügen, um eine geförderte Palette bei einer Arbeitsstation auf einem starren Maschinentisch abzusetzen. Eine derartige vertikal verfahrbare Hubplatte ist in Figur 4 mit 58 bezeichnet. Durch einen nicht näher wiedergegebenen Antrieb ist sie gemäß Pfeil 60 nach oben oder nach unten bewegbar. Über angelenkte Übergangsplatten 62 ist die Hubplatte 58 mit seitlich angeordneten rahmenfesten Stützplatten 28 verbunden.

In Figur 4 ist ferner bei der Hubplatte schematisch eine mit einem Werkstück beladene Palette 64 angedeutet. Um die beim Anheben bzw. Absenken der Hubplatte 58 auftretenden Längenänderungen der Gliederkette 24 aufnehmen zu können, ist dem in Figur 4 rechts gelegenen der Kettenräder 22 eine Spanneinrichtung 66 zugeordnet, welche schematisch als Federzylinder angedeutet ist.

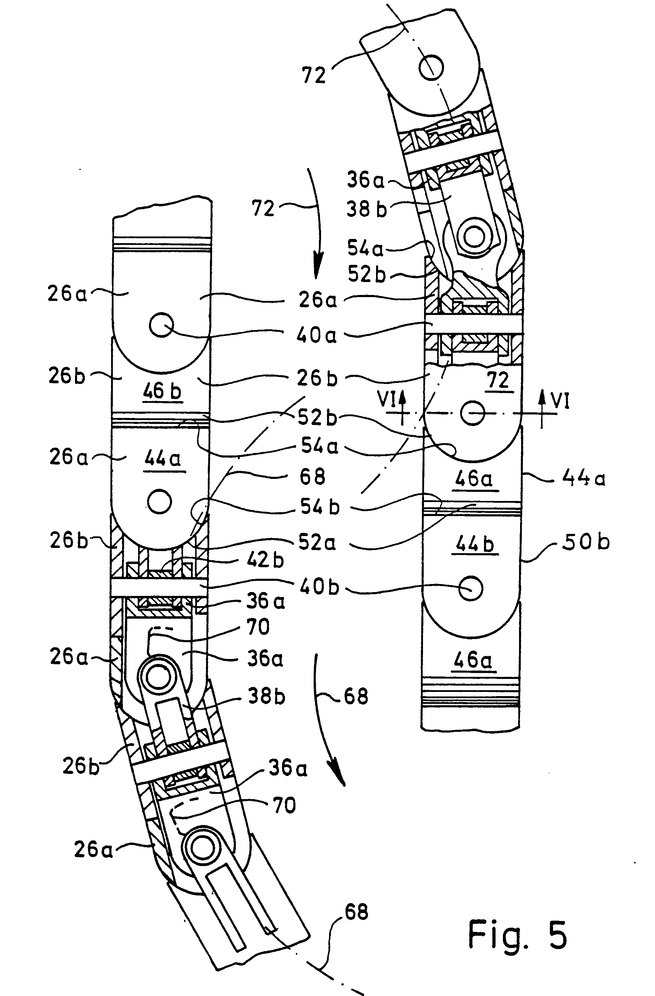

Figur 5 zeigt eine abgewandelte Gliederkette, welche als Kreuzgelenkkette ausgebildet ist und ebenfalls mit Tragkappen bestückt ist, welche zur Mitnahme von Paletten und gleichzeitig zur Kapselung der Gliederkette dienen.

Bauteile, welche für eine normale Gliederkette unter Bezugnahme auf die Figuren 1 bis 3 schon erläutert wurden, sind wiederum mit denselben Bezugszeichen versehen. Dabei ist jeweils zusätzlich für solche Teile, welche den einen Gelenkachsen zugeordnet sind, ein "a" angehängt, während Bauteile, die den um 90° versetzten zweiten Gelenkachsen zugeordnet sind, zusätzlich durch "b" gekennzeichnet sind.

Ein wesentlicher Unterschied der Tragkappen nach Figur 5 gegenüber den Tragkappen nach den Figuren 1 bis 3 besteht darin, daß nunmehr die konvexen Stirnflächen 52 und die konkaven Stirnflächen 54 senkrecht aufeinanderstehende Zylinderachsen haben. Außerdem sind die Tragkappen 26 nunmehr mit quadratischer Außenkontur ihres transversalen Querschnittsprofiles versehen, so daß die Schenkel 44 einer betrachteten Tragkappe mit der Oberseite 50 benachbarter Tragkappen eine durchgehende Auflagefläche für die zu fördernden Paletten bilden. Ähnlich bilden Oberseite und Unterseite des anderen Satzes der Tragkappen 26 zusammen mit den Schenkeln 44 der dazwischen geschachtelten Tragkappen durchgehende seitliche Begrenzungsflächen, so daß man insgesamt ein kardanisch bewegliches flexibles Zugmittel erhält, welches quadratischen Querschnitt aufweist und glatt durchgehende Begrenzungsflächen hat.

In der linken Hälfte von Figur 5 ist mit 68 schematisch ein Umlenk-Kettenrad angedeutet, welches mit seinen Zähnen 70 durch die offenen Seiten der einen Tragkappen 26 eintreten kann, welchen Bolzen 40 mit zur Achse des Kettenrades 68 paralleler Achse zugeordnet sind. Im übrigen ist das Kettenrad 68 soweit abgedreht, daß die Tragkappen 26 unbehindert über es hinweglaufen können.

Im rechten Teil von Figur 5 sind die gleichen Kettenglieder wie im linken Teil in hierzu senkrechter Richtung wiedergegeben. Außerdem ist bei 72 ein weiteres Kettenrad angedeutet, durch welches die durch Gliederkette und Tragkappen gebildete Anordnung um eine zur Achse des Kettenrades 68 senkrechte Achse umgelenkt wird.

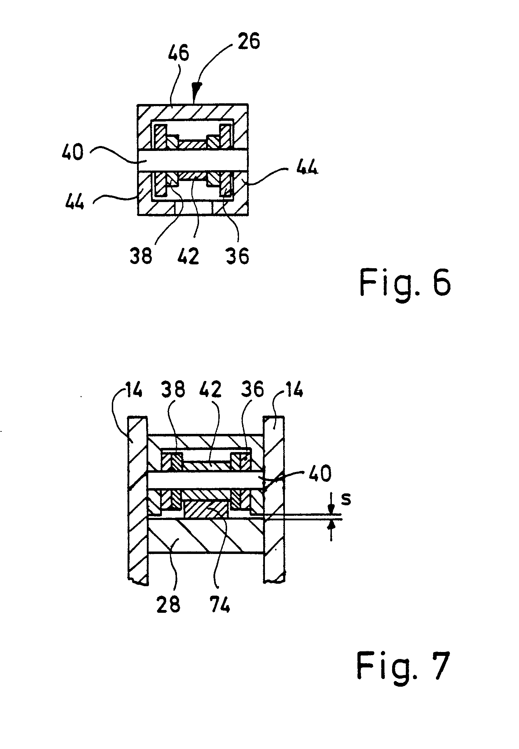

Figur 7 zeigt eine Abwandlung des Ausführungsbeispieles nach den Figuren 1 bis 3, welche ein Fördern unter verminderter Reibung ermöglicht. Hierzu ist auf der Stützplatte 28 eine Laufschiene 74 vorgesehen, welche zwischen die inneren Laschen 38 der Gliederkette 24 einführbar ist, so daß die Hülsen 42 auf der Laufschiene 74 laufen.

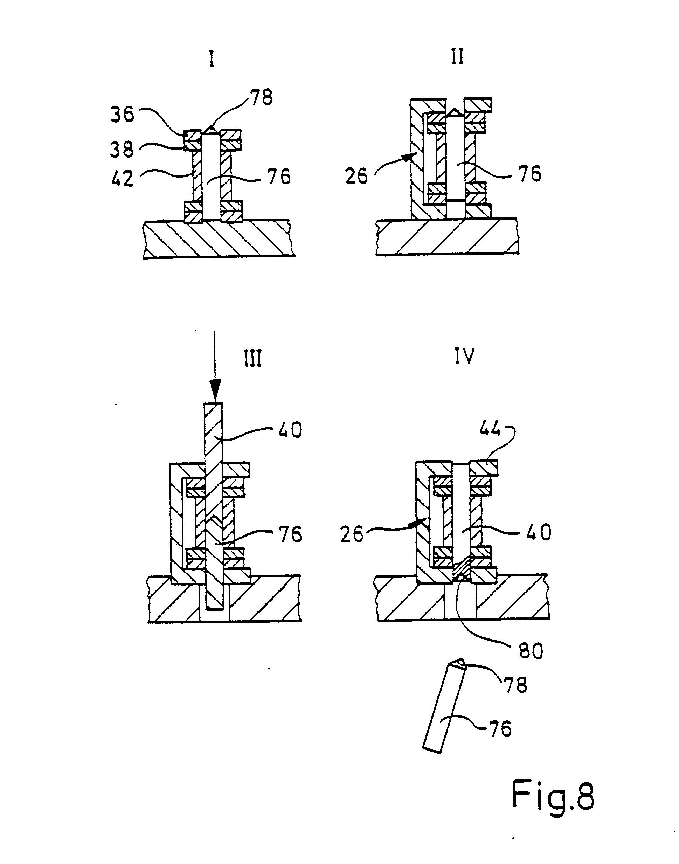

Figur 8 zeigt verschiedene Stadien des Zusammenbaus einer mit Tragkappen 26 bestückten Gliederkette 24.

Zunächst werden die äußeren Laschen 36 und die inneren Laschen 38 sowie die Hülsen 42 in üblicher Weise zusammengestellt, zum Verbinden werden aber Montagebolzen 76 verwendet, die nur in leichtem Preßsitz in den äußeren Laschen 36 sitzen, gerade ausreichend, um die verschiedenen Teile zusammenzuhalten. Die Montagebolzen 76 sind am einen Ende mit einem kegelförmigen Vorsprung 78 versehen.

Auf die so erhaltene, noch nicht belastungsfähige Kette werden dann die einzelnen Tragkappen 26 aufgeschoben und so positioniert, daß die Bohrungen in ihren Schenkeln 44 mit den Montagebolzen 76 fluchten. Die axiale Länge der letzteren kann so bemessen sein, daß der Vorsprung 78 ein leichtes Verrasten der Tragkappe 26 in etwa justierter Lage gewährleistet.

Nun wird der Montagebolzen 76 unter Verwendung des echten Kettenbolzens 40 ausgetrieben, welcher durch den einen der Schenkel 44 eingeschlagen wird. Zum Ausgleich etwa noch vorhandener Fehljustierung der Tragkappe 26 bezüglich des Montagebolzens 76 ist der Kettenbolzen 40 mit einer Vertiefung 80 versehen, die ebenfalls kegelstumpfförmig ist, jedoch etwas größeren Öffnungswinkel hat als der Vorsprung 78. Der Kettenbolzen 40 sitzt nach dem Einschlagen in fester Preßpassung in den äußeren Laschen 36.

**Patentansprüche**

1. Förderkette zur Verwendung in einem Palettenförderer mit einer Gliederkette und auf diese in gleiche Richtung weisend aufgesetzten, U-förmiges transversales Querschnittsprofil aufweisenden Tragkappen, dadurch gekennzeichnet, daß

a) jeder Gelenkachse (40) der Gliederkette (24) genau eine Tragkappe (26, 36, 38) zugeordnet ist; und

b) die vordere Stirnfläche (52) einer Tragkappe (26, 36, 38) und die hintere Stirnfläche (54) der vorhergehenden Tragkappe (26, 36, 38) zueinander komplementäre zylindrische Flächen sind, deren Achsen mit der zugehörigen Gelenkachse (40) zusammenfallen.

2. Förderkette nach Anspruch 1, dadurch gekennzeichnet, daß die Schenkel (44) der Tragkappen (26) über diejenige Seite der Gliederkette (24) hinausgeführt sind, die von die Schenkel (44) verbindenden Tragabschnitten (46) der Tragkappen (26) abliegt, und jeweils mit einer ebenen, zum zugehörigen Tragabschnitt (46) parallelen Gleitfläche (48) versehen sind.

3. Förderkette nach Anspruch 1 oder 2, dadurch gekennzeichnet, daß die Tragkappen (26) bei ihrer konvex gekrümmten Stirnfläche (52) einen zur Gliederkette (24) nach innen gezogenen, die Kappenschenkel (44) verbindenden Dichtsteg (56) aufweisen, dessen Außenseite eine glatte Fortsetzung der konvexen zylindrischen Stirnfläche (52) darstellt.

4. Förderkette nach einem der Ansprüche 1 bis 3, dadurch gekennzeichnet, daß Bolzen (40) der Gliederkette (24) in oder kurz hinter der Außenfläche der Kappenschenkel (44) enden.

5. Förderkette nach einem der Ansprüche 1-4, bei welcher die Gelenkachsen zweier ineinandergeschachtelter Sätze äquivalenter Kettenelemente der Gliederkette um einen Winkel von vorzugsweise 90° gegeneinander verkippt sind, dadurch gekennzeichnet, daß die konvexe Stirnfläche (52) am einen Ende einer Tragkappe (26, 36, 38) und die konkave zylindrische Stirnfläche (54) am anderen Ende einer Tragkappe (26, 36, 38) Achsen haben, die um den Verkippungswinkel aufeinanderfolgender Elemente der Gliederkette (24) gegeneinander winkelmäßig versetzt sind, und daß die Außenkontur der transversalen Querschnittsfläche der Tragkappen (26, 36, 38) einem Quadrat entspricht.

6. Verfahren zum Herstellen einer Förderkette nach einem der Ansprüche 1-5, dadurch gekennzeichnet, daß Laschen, Bolzen und Hülsen der Gliederkette in an sich bekannter Weise zusammenmontiert werden, wobei jedoch Montagebolzen verwendet werden, welche im leichten Press-Sitz in die äußeren Laschen der Gliederkette passen und deren Länge kleiner ist als der lichte Abstand zwischen den Kappenschenkeln; daß anschließend die Tragkappen über die so vorgefertigte Kette geschoben und mit ihren Bolzen-Aufnahmeöffnungen auf die Montagebolzen ausgerichtet werden; und daß anschließend die Montagebolzen unter Verwendung von Kettenbolzen aus der Gliederkette herausgestoßen werden, welche durch die Bolzenaufnahmeöffnungen der Tragkappen eingeführt werden und größere Länge haben als dem lichten Abstand zwischen den Kappenschenkeln entspricht.

7. Verfahren nach Anspruch 6, dadurch gekennzeichnet, daß die Montagebolzen zumindest an einem Ende mit einer zentralen Vertiefung oder vorzugsweise einem zentralen Vorsprung versehen sind, welcher mit einem im wesentlichen komplementären Formschlußmittel an mindestens einem Ende der Kettenbolzen zusammenarbeitet.

8. Ketten-Fördereinheit zur Verwendung in einem Palettenförderer, mit einer Förderkette nach einem der Ansprüche 1-5 und einem Rahmen, welcher die Gliederkette trägt und einer Abstützfläche aufweist, auf der die Tragkappen laufen, dadurch gekennzeichnet, daß die planparallelen Außenflächen der Kappenschenkel (44) der Tragkappen (26) in Gleitpassung zwischen seitlichen Wangenplatten (14) des Rahmens laufen.

9. Fördereinheit nach Anspruch 8, dadurch gekennzeichnet, daß ein Teil der Abstützfläche des Rahmens durch eine zwischen die Laschen (36, 38) der Elemente der Gliederkette (24) eingreifende, mit Kettenhülsen (24) der Gliederkette (24) zusammenarbeitende Laufschiene (74) gebildet ist, deren Höhe so bemessen ist, daß die der Förderfläche (50) gegenüberliegende Lauffläche (48) der Tragkappen (26) von der Abstützfläche (28) freikommt.

10. Fördereinheit nach Anspruch 8, dadurch gekennzeichnet, daß ein Teil der Abstützfläche des Rahmens von einer senkrecht zur Förderebene verstellbaren Hubplatte (58) gebildet ist und daß Mittel (66) zum Kompensieren von Änderungen in der Länge der Gliederkette (24) beim Verlagern der Hubplatte (58) vorgesehen sind.

**Claims**

1. Conveyor chain for use in a palette conveyor with a link chain and carrying caps fitted on the latter, pointing in the same direction and having a U-shaped cross-sectional profile, characterised in that
a) a carrying cap (26, 36, 38) is associated exactly with each link pin (40) of the link chain (24); and
b) the front end face (52) of a carrying cap (26, 36, 38) and the rear end face (54) of the preceding carrying cap (26, 36, 38) are cylindrical surfaces complementing each other, whereof the axes coincide with the associated link pin (40).

2. Conveyor chain according to Claim 7, characterised in that the branches (44) of the carrying caps (26) are guided beyond that side of the link chain (24) which is remote from the carrying sections (46) of the carrying caps (26) connecting the branches (44) and are respectively provided with a flat sliding surface (48) parallel to the associated carrying section (46).

3. Conveyor chain according to Claim 1 or 2, characterised in that in the case of their end face (52) curved in a convex manner, the carrying caps (26) comprise a sealing web (56) drawn inwards and connecting the cap branches (44), the outer side of which sealing web represents a smooth continuation of the convex, cylindrical end face (52).

4. Conveyor chain according to one of Claims 1 to 3 characterised in that studs (40) of the link chain (24) terminate in or shortly behind the outer surface of the cap branches (44).

5. Conveyor chain according to one of Claims 1 to 4, in which the link pins of two nested sets of equivalent chain members of the link chain are tilted by an angle preferably of 90° with respect to each other, characterised in that the convex end face (52) at one end of a carrying cap (26, 36, 38) and the concave cylindrical end face (54) at the other end of a carrying cap (26, 36, 38) have axes which are offset angularly with respect to each other by the tilting angle of successive elements of the link chain (24) and that the outer contour of the transverse cross-sectional surface of the carrying caps (26, 36, 38) corresponds to a square.

6. Method for the production of a conveyor chain according to one of Claims 1 to 5, characterised in that cover plates, studs and sleeves of the link chain are fitted together in manner known per se, however assembly studs being used which fit with a light press fit in the outer cover plates of the link chain and whereof the length is less than the inside width between the cap branches; that then the carrying caps are slid over the chain pre-fabricated in this way and aligned by their stud-receiving openings with the mounting studs; and that then the mounting studs are pushed out of the link chain using chain studs, which are introduced through the stud-receiving openings of the carrying caps and have a greater length than the inside width between the cap branches.

7. Method according to Claim 6, characterised in that the assembly studs are provided at least at one end with a central recess or preferably a central projection, which co-operates with substantially complementary form-locking means at at least one end of the chain studs.

8. Chain conveyor unit for use in a palette conveyor, with a conveyor chain according to one of Claims 1 to 5 and a frame which carries the link chain and comprises a support surface, on which the carrying caps run, characterised in that the plane parallel outer surfaces of the cap branches (44) of the carrying caps (26) run with a sliding fit between lateral cheek plates (14) of the frame.

9. Conveyor unit according to Claim 8, characterised in that part of the support surface of the frame is formed by a runway rail (74) engaging between the cover plates (36, 38) of the members of the link chain (24) and cooperating with chain sleeves (24) of the link chain (24), the height of which runway rail is measured so that the running sur face (48) of the carrying caps (26) located opposite the conveying surface (50) comes free from the support surface (28).

10. Conveyor unit according to Claim 8, characterised in that part of the support surface of the frame is formed by a lifting plate (58) adjustable at right angles to the conveying plane and that means (66) are provided for compensating for variations in the length of the link chain (24) at the time of displacement of the lifting plate (58).

## Revendications

1. Chaîne convoyeuse destinée à être utilisée dans un convoyeur de palettes comportant une chaîne à maillons et des chapeaux d'appui présentant une section transversale en forme de U installés sur ladite chaîne à maillons dans le même sens que celle-ci, caractérisée en ce que

a) chacun des axes d'articulation (40) de la chaîne à maillons (24) se trouve précisément associé à un chapeau d'appui (26, 36, 38) et en ce que

b) la face avant (52) d'un chapeau d'appui (26, 36, 38) et la face arrière (54) du chapeau d'appui (26, 36, 38) qui précède sont des surfaces cylindriques complémentaires, dont les axes coïncident avec l'axe d'articulation (40) correspondant.

2. Chaîne convoyeuse suivant la revendication 1, caractérisée en ce que les ailes (44) des chapeaux d'appui (26) sont prévues de chaque côté de la chaîne à maillons (24) et sont reliées entre elles par un segment d'appui (46), et possèdent chacune une surface de glissement (48) parallèle au segment d'appui (46) correspondant.

3. Chaîne convoyeuse suivant la revendication 1 ou 2, caractérisée en ce que la face convexe (52) des chapeaux d'appui (26) présente un talon d'étanchéité (56), dirigé vers la chaîne à maillons (24) et reliant les ailes (44) des chapeaux d'appui (26), dont le côté extérieur forme un prolongement lisse de la face cylindrique convexe (52).

4. Chaîne convoyeuse suivant une des revendications 1 à 3, caractérisée en ce que les broches (40) de la chaîne à maillons (24) se terminent dans ou légèrement derrière les surfaces extérieures des ailes (44) des chapeaux d'appui (26).

5. Chaîne convoyeuse suivant une des revendications 1 à 4 dans laquelle les axes d'articulation de deux éléments équivalents de la chaîne à maillons insérés l'un dans l'autre sont décalés l'un par rapport à l'autre selon un angle de 90° de préférence, caractérisée en ce que la face convexe (52) à l'extrémité d'un chapeau d'appui (26, 36, 38) et la face cylindrique concave (54) à l'autre extrémité d'un chapeau d'appui (26, 36, 38) possèdent des axes décalés angulairement par rapport à l'angle formé entre deux éléments consécutifs de la chaîne à maillons (24) et en ce que le contour extérieur des surfaces transversales des chapeaux d'appui (26, 36, 38) correspond à un carré.

6. Procédé de fabrication d'une chaîne convoyeuse suivant une des revendications 1 à 5, caractérisé en ce qu'il est d'abord assemblé de manière connue en soi des maillons, des broches et des douilles de chaîne à maillons, en utilisant des axes de montage s'adaptant suivant un ajustage à frottement doux dans les maillons extérieurs de la chaîne à maillons et présentant une longueur inférieure à l'écartement des ailes des chapeaux d'appui, en ce que les chapeaux d'appui sont ensuite installés sur la chaîne préassemblée de manière à ce que leurs orifices de passage de broche viennent s'aligner avec les axes de montage et en ce que les axes de montage sont enfin expulsés hors de la chaîne à maillons en utilisant les broches de la chaîne, lesquelles sont introduites dans les orifices des chapeaux d'appui et présentent une longueur supérieure à l'écartement des ailes des chapeaux d'appui.

7. Procédé suivant la revendication 6, caractérisé en ce qu'une extrémité au moins des axes de montage est pourvue d'un évidement central ou se présente de préférence sous la forme d'une tête conique, laquelle vient s'insérer dans une forme substantiellement complémentaire prévue à une extrémité au moins des broches de chaîne.

8. Unité convoyeuse à chaîne destinée à être utilisée dans un convoyeur de palettes, comportant une chaîne convoyeuse suivant une des revendications 1 à 5 et un châssis supportant la chaîne à maillons et présentant une surface d'appui sur laquelle se déplacent les chapeaux d'appui, caractérisée en ce que les surfaces extérieures parallèles et planes des ailes (44) des chapeaux d'appui (26) se déplacent similairement à un ajustage glissant entre des plaques jumelles latérales (14) du châssis.

9. Unité convoyeuse suivant la revendication 8, caractérisée en ce qu'une partie de la surface d'appui du châssis est formée par un rail de roulement (74), installé entre les maillons (36, 38) des éléments de la chaîne à maillons (24) et agissant sur les douilles (42) de la chaîne à maillons (24), dont la hauteur est définie de telle sorte que les surfaces de glissement (48) des chapeaux d'appui (26) situées du côté opposé à la surface de convoyage (50) ne se trouvent plus en contact avec la surface d'appui (28).

10. Unité convoyeuse suivant la revendication 8, caractérisée en ce qu'une partie de la surface d'appui du châssis est formée par un plateau (58) se déplaçant perpendiculairement au plan de convoyage et en ce qu'il est prévu un dispositif (66) destiné à compenser les variations en longueur de la chaîne à maillons (24) lors de l'abaissement du plateau mobile (58).

Fig. 1

Fig. 2

Fig. 3

Fig. 4

**0 146 598**

Fig. 5

Fig. 6

Fig. 7

Fig.8